# EUROPEAN PATENT SPECIFICATION

(11) **EP 1 142 779 B1**
(45) Date of publication and mention of the grant of the patent: **24.05.2006**
(21) Application number: 01108509.9
(22) Date of filing: 04.04.2001
(51) Int. Cl.: B62H 1/12, B62H 1/14, B62K 5/00

(54) **Laterally leanable vehicle**
Seitlich neigbares Fahrzeug
Véhicule latéralement inclinable

(30) Priority: 04.04.2000 SE 0001210
(43) Date of publication of application: 10.10.2001
(73) Proprietor: YAMAHA HATSUDOKI KABUSHIKI KAISHA, Iwata-shi Shizuoka-ken (JP)
(72) Inventor: Jansson, Lars, 122 39 Enskede (SE)
(74) Representative: Grünecker, Kinkeldey, Stockmair & Schwanhäusser Anwaltssozietät

(56) References cited:
- DE-C- 136 862
- DE-C- 804 527
- FR-A- 2 338 836
- GB-A- 191 415 303
- PATENT ABSTRACTS OF JAPAN vol. 018, no. 302 (M-1618), 9 June 1994 (1994-06-09) & JP 06 064083 A (TOSHIBA MACH CO LTD), 8 March 1994 (1994-03-08)

## Description

The present invention relates to a laterally leanable vehicle according to the preamble of claim 1.

Such a vehicle is shown by FR 2 338 836 A and is for example a motor cycle or a snow mobile.

A requirement exists to use motor cycles or snow-mobile vehicles in a wider range. A wider range of use calls for improvements in motor cycle usage, in terms of the motor cycle or equivalent becoming easier to handle at lower speeds. There is also a requirement for the driver and passenger seats to be enclosed to a greater extent in such a way that the driver and any passengers are given a placement in the vehicle which offers greater protection from the collision aspect but also from wind and weather. A greater degree of enclosure of the driver and passenger seats implies, inter alia, that the driver, at lower speeds or when stationary, is unable to balance the vehicle by putting the foot down. Said requirements, as such, can successfully be addressed with known supporting wheel arrangements.

Motor cycles with supporting wheel arrangements which are active or extended at lower speeds and which are deactivated or retracted at higher speeds are well known. For examples of such motor cycles, reference can be made to the Ecomobile motor cycle sold by the company PERAVES. This known motor cycle has an internal mounting or a body for a driver and possible passenger.

There are, nevertheless, salient requirements which have not hitherto been met with known arrangements and vehicles. The natural motor cycle sensation should not be lost or impaired, but rather the vehicle should be able to be leaned in bends and the leaning should be able to be cancelled, as in normal riding of a motor cycle. The motor cycle must also be stabilized during starting and braking, especially at low speeds. The stability which is obtained at high speeds must be maintainable and should not be affected by the supporting wheel arrangement. Thus, the supporting wheels should offer assistance over the full range of speed without impairing the motor cycle sensation at the higher speeds.

It may also be favorable that the supporting member arrangement does not encroach on the space in the enclosure of the motor cycle when the vehicle is leaning. It is also advantageous that components which are known per se can be used and benefits are obtained if a supporting member arrangement can essentially constitute a so-called passive system, i.e. a system which does not need, for example, electrical or hydraulic control systems in order to function. Sometimes there is a need to have different placements for the motor in different designs, for example, a motor in which a conventional pivot shaft cannot be used due for example to the fact that the motor is placed relatively far forward and/or low down. Moreover, it may be also favorable to curb or counter the occurrence of leaning-increasing forces.

It is an objective of the present invention to provide a laterally leanable vehicle having a suitable handling under low and high speed conditions.

According to the present invention, said objective is solved by a laterally leanable vehicle according to claim 1.

It is an advantage of the present invention to provide a laterally leanable vehicle, wherein the leaning of the vehicle at lower speeds is favorably influenced and there is only a negligible influence or no influence whatsoever on the leaning of the vehicle at higher speeds.

Preferred embodiments of the present invention are laid down in the dependent claims.

Hereinafter, the present invention is illustrated and explained in greater detail by means of preferred embodiments in conjunction with the accompanying drawings. In the drawings, wherein:
- Figure 1: shows, in a view obliquely from above/from the front, an embodiment of a laterally leanable vehicle with a lateral supporting wheel arrangement, wherein the vehicle (motor cycle) is shown purely symbolically by means of its front and rear wheels;
- Figure 2: shows, in cross section and from the front, parts of the arrangement according to Figure 1, the rear wheel of the vehicle being shown laterally inclined at a first leaning angle in relation to a ground surface, and the leaning induces lateral or transverse displacement of the supporting wheel or supporting member arrangement in the lateral direction of the vehicle;
- Figure 3: shows a cross section corresponding to that in Figure 2, but in which the rear wheel of the vehicle has been laterally leaned at a different angle greater than the first angle and giving rise to a greater lateral displacement of the supporting wheels from a vertical plane through the essential point of contact of the wheel with the ground surface/ground plane;
- Figure 4: shows, in cross section corresponding to the cross sections in Figures 2 and 3, the leaning angles in respect of various displacements of the center of gravity in which the lateral displacement of the lateral supporting wheels assumes values corresponding to the size of the displacement of the center of gravity;
- Figure 5: shows, in cross section according to Figures 2-4, the leaning in the transverse direction of the enclosing part/chassis and the relationship of this to the transversely displaced lateral supporting wheels;
- Figure 6: shows, in horizontal view, a platform formed by the front and rear wheels and the lateral supporting wheels and the position of the center of gravity in relation to the platform at various degrees of leaning;
- Figure 7: shows, from the side, a motor cycle provided with an enclosing part for driver and passenger;
- Figure 8: shows, in a view obliquely from above/from the front, a second embodiment in relation to the embodiment according to Figure 1;
- Figure 9: shows, from the side, parts of a lateral supporting member in the form of a wheeled ski runner;
- Figure 10: shows, in cross section, the wheeled ski runner according to Figure 9;
- Figure 11: shows, from the side, a lateral supporting member construction in the form of a bogie or equivalent having a number of smaller wheels at different levels arranged one behind the other;
- Figure 12: shows, from the rear, the vehicle and its displacement of the point of contact between rear wheel and ground surface at higher speeds;
- Figure 13: shows, viewed from the rear side of the vehicle, generated forces about pivot shaft and wheel;
- Figure 14: shows, in perspective view and in basic representation, an arrangement for leaning-revoking members which can be activated when a vehicle is leaning heavily in a parked position;
- Figures 15: show, from the rear and in basic representation, the interaction of the chassis
- and 15a: with a four-bar mechanism or linkage by means of which a virtual center of rotation is created;
- Figure 16: shows, in a view obliquely from below/from the front, the four-bar mechanism, which interacts with torsion bars; and
- Figure 17: shows, a steering angle means that influences the lean angle when the hydraulic cylinders are locked in a low speed mode.

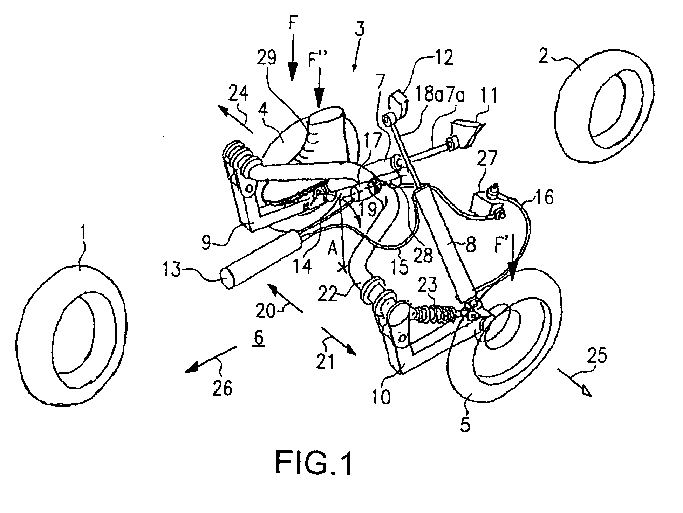

In Figure 1, a motor cycle (laterally leanable vehicle) is indicated symbolically by its front and rear wheel 1 and 2 (front and rear main support members) respectively and by a supporting member arrangement denoted in the figure by 3. In the illustrative embodiment, the arrangement incorporates lateral supporting members in the form of supporting wheels 4 and 5. The wheels 1, 2, 3 and 4 can in principle be constituted by members which can be brought into interaction with the ground surface of the vehicle, for example ski runner members, ski runner members combined with wheels, for example smaller wheels, etc.

The lateral supporting member arrangement can be acted on by force-producing members which can be constituted by hydraulic cylinders 7, 8 of a known type. The hydraulic cylinders generate forces F, F' which press the wheels 4, 5 down against the ground surface and, when they are activated, hold the supporting wheels pressed down against the ground surface over the full range of speed of the motor cycle. The cylinder bodies of the hydraulic cylinders are secured in link parts 9 and 10, on which the supporting wheels 5 and 4 are mounted respectively. The piston rods 7a, 8a of the hydraulic cylinders are mounted in symbolically indicated chassis parts 11, 12. The hydraulic cylinders can be powered in a known manner from a hydraulic power source 13 on the motor cycle and which is indicated only symbolically. The power supply to the hydraulic cylinders is symbolized by 14 and 15. Alternatively, the inner chambers of the cylinders can be connected to one another in a known manner by a symbolically indicated connection 16.

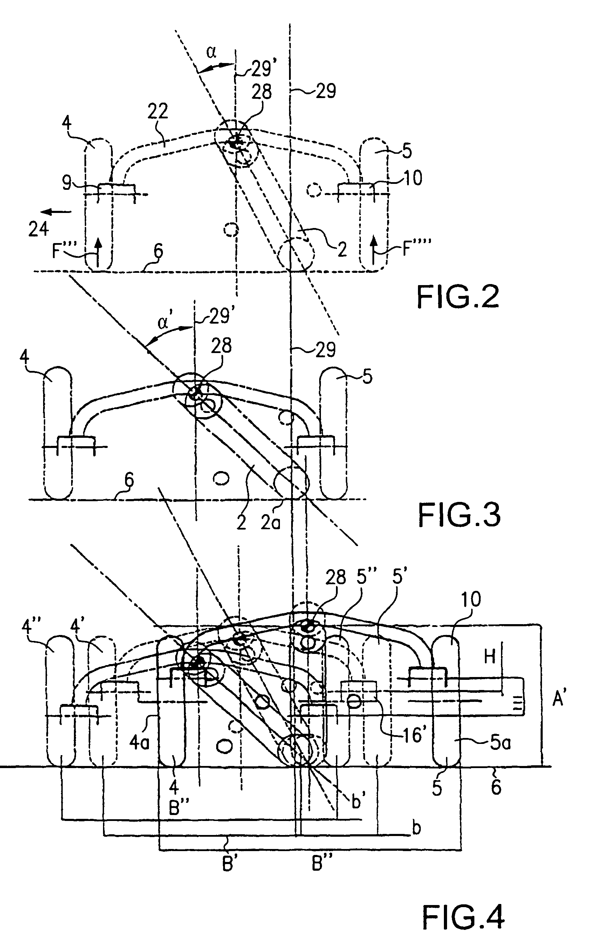

Thus, the lateral supporting arrangement is arranged with members 7, 8 which produce pressing-down forces, for example hydraulic cylinders, and/or is exposable to manually applied pressing-down forces F" (as described in detail later). The pressing-down forces F, F', F" are chosen such that, in the said lower speed range, they create a friction F"', F"' (see Fig.2) between supporting members 4, 5 and the ground surface 6, which friction produces a leaning function sensitive to the displacement of the center of gravity.

The arrangement 3 comprises a pivot shaft 17, which defines a pivot axis and extends in a vertical plane in the longitudinal direction of the vehicle. Said pivot axis extends along a center axis of the pivot shaft. The pivot shaft 17 is (preferably) inclined relative to a horizontal plane (in the figure, parallel with the ground surface 6) for the vehicle.

Under low speed condition, the pivot shaft moves along a circular path, symbolized by the arrows 18, 19, when the vehicle is leaning, due to displacement of the center of gravity 28 of the vehicle as described in detail later. Said displacement of the center of gravity is achieved by the driver and possibly the passenger altering his/their body weight in or on the vehicle. The leaning of the vehicle is affected in its transverse direction, i.e. 20 or 21. The motion 18 or 19 of the pivot shaft 17 on the occurrence of leaning is transmitted to the supporting wheels via or by means of a supporting wheel shaft 22, which forms a unit with the pivot shaft 17. Said shaft 22 supports at its ends links or link parts 9 and 10, in or on which the supporting wheels are mounted. The pivot shaft 17 forms, together with shaft parts 22 supporting the supporting members, a bridge extending in the transverse direction of the vehicle. Said links 9 and 10 are pivotably supported on the shaft 22 such that the links 9 and 10 are swingable within planes being substantially vertical and disposed on both sides of the vehicle. The arrangement also comprises cylinder springs, of which only the cylinder spring 23 for the link part 10 and the supporting wheel 5 is shown in the figure. The cylinder springs are provided to press the link parts 9, 10 and the lateral supporting wheels 4, 5 against the ground surface.

When the pivot shaft 17 forms part of a common unit together with shaft parts 22 extending in the transverse direction of the vehicle, these support at their ends one or more link parts 9, 10 to which the respective supporting member 4, 5 or supporting member construction (38, 39, 40, 41 described in detail later) is, for example, resiliently secured.

The respective lateral or transverse motion of the pivot shaft 17 causes corresponding transverse motions 24 and 25 of the lateral supporting wheels relative to the ground surface, respectively. The motions of the pivot shaft 17 and the lateral supporting wheels 4, 5 are made in the same direction, i.e. in the case of the motion 18, the displacement occurs in the direction 24, and in the case of the motion 19, in the direction 25.

At low speeds of the vehicle in its forward direction 26, the side wheels will be displaced with friction or rubbing against the ground surface 6. At higher speeds with large turning radii, the lateral supporting wheels are able to follow these, which in turn means that at high speeds there is no or only a very small amount of friction or rubbing relative to the ground surface. Friction-eliminating and rubbing-eliminating factors are constituted by the displacement of the point of contact between the rear wheel or rear ski runner in a direction opposite to the leaning angle and, in case of supporting wheels, by their high/higher rotational speeds. When there are supporting wheels, the lateral displacement of the elasticity of the side wheels is also absorbed in tyres or rubber rings and through the increasing rotational speed of the supporting wheels. The supporting wheel arrangement does not therefore affect the stability of the vehicle at high speeds and produces a smooth and even leaning function at lower speeds. The transfer between the friction-applying function and the non-friction-applying function can in principle be made smooth, for example, sinusoidal.

In the zero leaning position within the lower speed range, the hydraulic cylinders can be locked, which means that the vehicle leaning remains constant. Such a locking can be realized with a locking member 27 which prevents hydraulic oil from flowing between the cylinders, disconnects the hydraulic source, etc. The locking members 27 forming part of the arrangement are activated in order to keep the vehicle in a desired leaning position, in particular in the lower speed range, and the zero leaning position when the vehicle, for example, is parked. The locking member(s) 27 is/are arranged so as to effect its/their locking at least the lower speeds in the lower speed range. The respective locking member 27 can be activated with a manual actuating member, with the starting or stopping function of the vehicle and/or with speed-detecting and/or leaning-detecting members. Said steering capability for the supporting wheels is obtained due to said inclination relative to the horizontal plane for the pivot shaft.

In the figure, the center of gravity of the vehicle is symbolized by 28 and the pivot shaft 17 extends preferably through the center of gravity which, in the leaning functions, acquires the same pattern of motion as the pivot shaft, i.e. in the direction of the arrows 18, 19.

The arrangement is also exposable to manual force application of pressing-down force F" for the supporting wheel against the ground surface, this being symbolized by an article of footwear 29. This pressing-down force F" can constitute a supplement or replacement of the force F. A distance A between the center line of the center of gravity and that of the pivot shaft 17 assumes the values quoted above. The arrangement 3, on the link or shaft part 9, 10 up to the respective supporting member 4, 5, has space for foot application 29, so that a driver 32 or passenger 33 is capable of producing a pressing-down force F" for the supporting member against the ground surface.

In Figure 2, a vertical plane in the longitudinal direction of the vehicle is indicated by 29, i.e. a vertical plane which extends perpendicular to the plane of the figure. When reference is made above and below to the vertical plane, what is meant throughout is a vertical plane which is related to the vehicle or motor cycle when this assumes an upright vertical position. The same applies to the horizontal planes discussed above and below.

In Figure 2, those parts which have equivalence in Figure 1 have been denoted by the same reference notations. In Figure 2, the vehicle has been assigned a leaning as a result of a change in the center of gravity 28. Said leaning has been achieved by the driver and possibly the passenger having displaced his/their body weight on the vehicle. Such leaning is present when the vehicle is turning under low speed condition. In the example according to Figure 2, the leaning angle is indicated by α, which indicates a right-hand turn. In connection with the leaning and the displacement of the center of gravity, according to the above, the pivot shaft 17 and shaft 22 are also shifted with regard to the plane 29. This shift means that the supporting wheels 4 and 5 are laterally displaced in the transverse direction 24 on the ground surface and that the lateral displacement corresponds to the displacement in question of the center of gravity 28.

A vertical plane through the center of gravity in the leaned position has been indicated by 29'. According to the above, the transverse displacement 24 of the supporting wheels 4 and 5 occurs relative to the ground surface 6. In the lower speed range for the vehicle, friction forces F"' and F"" are generated, on the lateral displacement, between the supporting wheels 4 and 5 respectively and the ground surface.

In the upper speed range, no rubbing or friction occurs by virtue of the fact that the turning radius for the vehicle is greater and that a certain steering capability exists for the supporting wheels 4 and 5 due to the inclination of the pivot shaft, which steering capability means that the supporting wheels can in principle be directed towards the center of rotation for the steering motion of the vehicle.

In Figure 3, it is indicated that the vehicle has been assigned a yet greater leaning angle α' than is the case with Figure 2 and that the supporting wheels 4 and 5 have been displaced even more. In the case according to Figure 3, which can be seen to constitute the maximum leaning scenario, the side wheels have assumed a position of maximum transverse displacement relative to the vertical plane 29 which extends essentially through the point of contact 2a of the rear wheel 2 with the ground surface 6.

In Figure 4, the original position for the lateral supporting wheel arrangement is indicated by unbroken lines and the various lateral displacement positions according to Figures 2 and 3 by dashed lines. In the example according to Figure 4, the highest point assumes a distance A' above the ground surface 6 in the order of magnitude of 0.4-0.5 meters, preferably around 0.45 meters.

In the present case, the width between the outsides 4a and 5a, respectively, of the supporting wheels 4 and 5 is ca. 0.85 meters. Depending on the construction of the vehicle in other respects, this width B can be varied and, for example, reduced down to ca. 0.5 meters. If a vertical line through the vertical extent of the supporting wheel 5' is laterally displaced by ca. 0.2 meters towards the vertical plane through the center of gravity 28, the result is that a distance B' between the center lines of the wheels 4' and 5' in the vertical direction assumes a value B' of ca. 0.55 meters. A corresponding lateral displacement which produces a distance B' of ca. 0.12 m produces a distance B" of ca. 0.65 meters between the center lines of the supporting wheels 4" and 5" in the vertical plane of the supporting wheels. The change H in vertical position of the link part 10 between the position for the lateral displacement according to 5' and the original position 10 assumes values of about 0.04 meters. The arrangement must in this case be such that this higher position is compensated by pressing down of the wheel 5 by means of the hydraulic cylinders in question (cf. 8 in Figure 1).

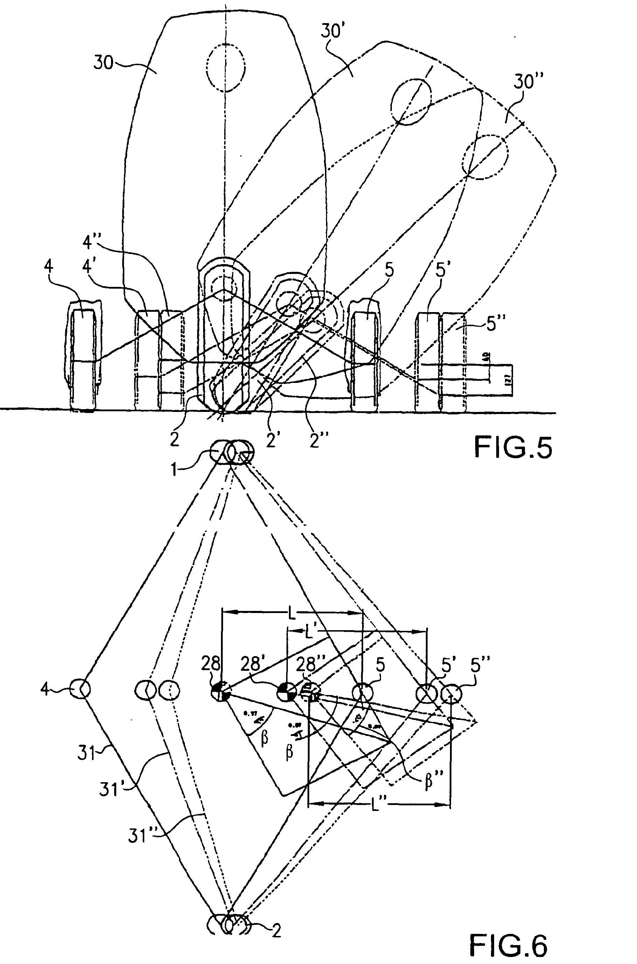

Figure 5 sets out to show the lateral leaning positions for a chassis or body part in connection with the leaning of the vehicle. A chassis or body part 30 is shown by unbroken lines in the upright position of the vehicle, i.e. in which the rear wheel 2 assumes a non-leaning position. 30' shows a first leaning position for the chassis or body, in which the rear wheel assumes the position 2', and 30" shows the maximum leaning position, in which the rear wheel 2" assumes the maximum leaning position. The various lateral displacement positions for the supporting wheels are shown by 4', 4" and 5', 5" respectively. It will be perceived that the laterally displaced supporting wheels do not encroach significantly on the space in the enclosing part. In the maximum transverse directional position 5", a certain inward projection can however be allowed to take place. Said inward projection however is minimal. As a result of the arrangement, the supporting wheels are thus able at all times to assume an upright position according to Figures 2, 3, 4 and 5 without the supporting wheels needing to encroach significantly on the interior space of the enclosing part.

In Figure 6, a platform formed basically from the front and rear wheels 1 and 2 and the supporting wheels 4 and 5 is shown by unbroken lines 31. In dependence on the lateral displacement of the supporting wheels, the appearance of the platform is altered according to 31' and 31". Figure 6 also shows the position of the center of gravity 28 in the platform and a distance L to the supporting wheel 5. On lateral displacement of the center of gravity to the position 28' and the position 28" respectively, the center of gravity continues to be located at a safe distance L' and L" from the supporting wheel position 5' and 5" respectively. The above-specified inclination of the pivot shaft 17 through the center of gravity 28 means that three angles β, β'and β" for the various center of gravity positions 28, 28' and 28" respectively assume various values which indicate the said steering capability for the supporting wheels. The angle β thus assumes an angular value of ca. 44°, β' an angular value of ca. 41° and β" an angular value of ca. 40°.

The laterally leanable vehicle described above has a frame means, e.g. a body part connecting a front and rear support member 1, 2. Lateral supporting members 4, 5 are disposed on both sides of the vehicle. Said lateral supporting members are pivotally supported around a single pivot shaft 17 on said frame means. A center axis of said pivot shaft defines a pivot axis provided close to the center of gravity of the vehicle. At least in an upright non-leanable position of said vehicle, said pivot axis extends in a longitudinal vertical plane of the vehicle and close to the center of gravity 28 of said vehicle.

The lateral displacement function is chosen such that, on maximum leaning of the vehicle, the stability created by the supporting members ensures that the center of gravity 28" is located at a considerable, i.e. safe, distance L" inside the particular supporting member 5".

The definition "close to the center of gravity" is to be understood in that said center of gravity will be displaced by the displacement of the driver's body weight when intending an inclination of the vehicle. Thus, the position of the center of gravity with a combination of the vehicle and the driver cannot be considered as being completely fixed. According to the embodiment, the pivot axis extends through the center of gravity. This means the center of gravity of the vehicle without any driver or passenger or taking an assumed middle weight of the driver and passenger into consideration.

The vehicle having the above-mentioned features is leanable under slow speed and high speed conditions. In particular, under low speed conditions the leaning action occurs around an axis through the contact points of the main support member with the ground surface. Thus, said contact points are substantially not displaced with regard to the ground surface, as indicated in Fig. 6. Due to the distance of the pivot axis from said ground surface, the lateral supporting members are shifted in lateral direction.

Under high speed conditions, the leaning operation occurs substantially around an axis close to the center of gravity, such leaning operation is well known in motorcycle driving dynamics. Thus, the contact points of the main support members are shifted with regard to the ground surface. Since the pivot axis, pivotably supporting the laterally supporting members on the frame, is close to the center of gravity at least in an upright, non-leaning position of the vehicle, said lateral supporting members are substantially not shifted with regard to the ground surface. Thus, under high speed conditions, said lateral supporting members have only a minor influence on the drive feeling of said vehicle, such that the drive feeling under high speed conditions is substantially the same as on a motorcycle without such supporting members.

According to the embodiment, the respective supporting member 4, 5, on the respective lateral displacement, assumes an upright position both during the lateral displacement and in the laterally displaced position.

With the lateral leanable vehicle having the features mentioned above, the natural motor cycle sensation is not lost or impaired. The vehicle is able to be leaned in bends and the leaning can be cancelled, as in normal riding of a motor cycle. The motor cycle is also stabilized during starting and braking, especially at low speeds. The stability which is obtained at high speeds is maintained and not or minor affected by the supporting wheel arrangement. Thus, the supporting wheels provide assistance over the full range of speed without impairing the motor cycle sensation at the higher speeds.

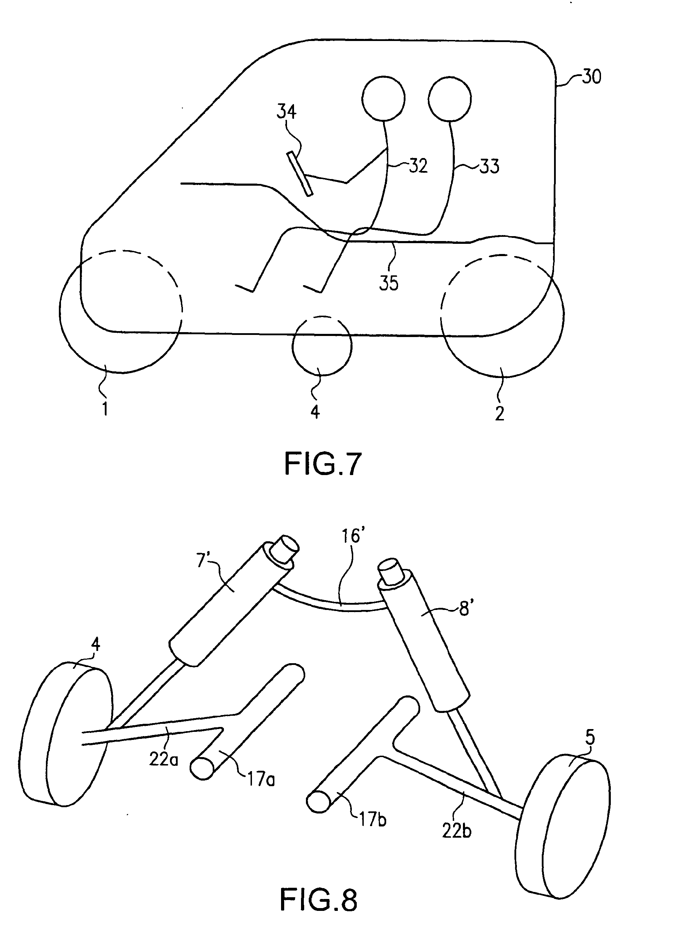

Figure 7 sets out to show the vehicle or motor cycle in question from the side, the positions of the front and rear wheels 1 and 2 and of the supporting wheel 4 in relation to the enclosing part 30 being shown. The positions of the driver 32 and a passenger 33 in the enclosing part have additionally been indicated. The vehicle has in a known manner steering members, for example a handlebar 34 and supporting parts or seats 35 for driver and passenger. The vehicle can in principle be constructed in a manner which is known per se with motor arrangement, drive members, tank, etc.

Figure 8 sets out to show an alternative embodiment in relation to the embodiment according to Figure 1. With the further embodiment only the differences with the embodiment described above are explained. The further features and the desired effects are substantially the same as of the above mentioned embodiment. In this case, double pivot shafts 17a and 17b are present, arranged one on each side of a vertical plane in question in the longitudinal direction of the vehicle. Said two pivot shafts 17a, 17b are defining the pivot axis around which said lateral supporting wheels are pivotable relative to the vehicle frame. Said pivot axis extends close to the center of gravity at least in the upright, non-leaned position of the vehicle. The generated motion of the respective pivot shafts 17a, 17b is transmitted to the respective supporting members concerned via one or more link arms or supporting shafts. The displacements of the supporting members are generated with the aid of two pivot shafts 17a, 17b which extend parallel with the longitudinal center plane of the vehicle close to, preferably at, the center of gravity 28 of the vehicle.

Coupled to the respective pivot shaft is a shaft part or link part 22a and 22b, in which the supporting wheels 4 and 5 respectively are mounted in a manner which is known per se. This illustrative embodiment also incorporates hydraulic cylinders 7' and 8' which produce the pressing-down forces in question against a particular ground surface (cf. above). The cylinders can be mutually connected by a line 16' so that necessary pressing-down is present at all times on the outer wheel during leaning and turning. In this case, the hydraulic cylinders can be locked in certain positions, for example in the zero leaning position, or a leaning position of a smaller angle in the lower speed range, etc.

In the embodiment with two pivot shafts, each of said pivot shafts supports one of the left and right lateral supporting members, respectively. Said pivot shafts are defining the pivot axis close to the center of gravity of the vehicle and in the upright non-leaning position of the same. Thus, for this embodiment, the pivot axis should be considered as a virtual pivot axis.

According to the above mentioned embodiment, said pivot axis (virtual pivot axis) can be provided such that it is moved away from the center of gravity in case the leaning angle increases. However, since said virtual pivot axis is close to the center of gravity, at least in the upright position of the vehicle, the leaning operation is improved close to said upright position from which each leaning action starts.

The hydraulic cylinders according to the embodiments in Figures 1 and 8 can in principle be replaced by other force-creating members which can be manually controlled, for example with push-button operation, with speed-detecting and/or position-detecting members, etc. In a preferred embodiment, the system is in its entirety, however, a passive system.

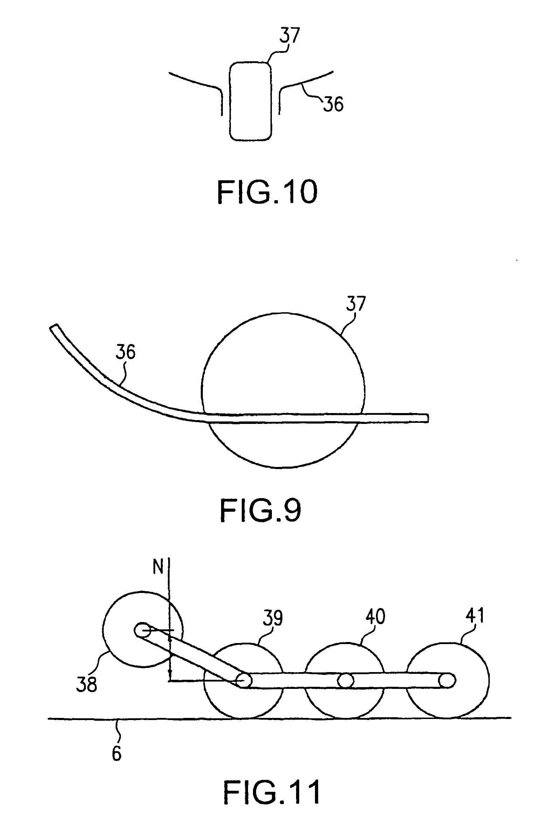

According to Figure 9, the lateral supporting members can have a different form than purely supporting wheel arrangements. The supporting member in a snow-mobile connection can thus be constituted by a ski-shaped member, the front and rear wheels also having the form of skis. Alternatively or additionally, the supporting members can have the form of a combination of ski part 36 and wheel part 37, as indicated in basic representation in Figures 9 and 10, bogie construction, etc.

Figure 11 shows a further example of supporting members which comprise a number of smaller wheels 38, 39, 40 and 41 arranged one behind the other. The wheels can in this case be arranged at different levels and, in the case according to Figure 11, the front wheel 38 is placed at a distance N above the level or levels of the wheels 39, 40 and 41. As a result of this arrangement, objects lying on or in the ground surface 6 can more easily be driven over. Thus, the respective supporting member consists of a supporting wheel 4, 5 or an arrangement of supporting wheels 38, 39, 40, 41, for example a bogie, which can have a number of smaller wheels placed side by side and/or one behind the other, a ski runner 36 with pass-through wheels 37 on the same or different levels one behind the other, etc.

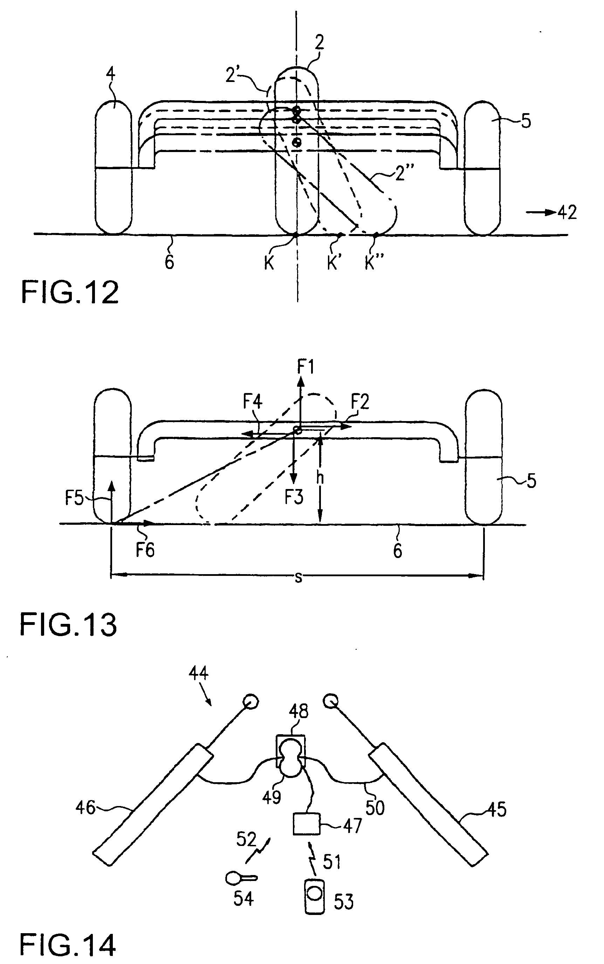

Figure 12 illustrates how the point of contact of the rear wheel 2 with a ground surface 6 is displaced in a direction 42 as the leaning of the rear wheel is increased at high speeds. As the speed increases, the point of contact shifts in the direction 42 which is opposite to the leaning direction according to k, k' and k", corresponding positions for the wheel (rear wheel) being indicated by 2, 2' and 2" respectively. This corresponds to the riding behavior in respect of motor cycles in which the vehicle is forced at higher speeds to assume the leaning position. The pivot shaft assumes lowered positions in dependence on the leaning position.

Thus, as already explained, under high speed conditions, the leaning operation occurs substantially around an axis close to the center of gravity, which is well known in motorcycle driving dynamics. Thus, the contact points of the main support members are shifted with regard to the ground surface. Since the pivot axis, pivotably supporting the laterally supporting members on the frame, is close to the center of gravity at least in an upright, non-leaning position of the vehicle, said lateral supporting members are substantially not shifted with regard to the ground surface. Thus, under high speed conditions, said lateral supporting members have only a minor influence on the drive feeling of said vehicle, such that the drive feeling under high speed conditions is substantially the same as on a motorcycle without such supporting members. The lateral displacement (24 or 25) can also be realized on the occurrence of leaning α, α' in the higher speed range. In this particular speed range, friction or rubbing is prevented by the said displacement of the point of contact and increased rotational speeds of the supporting wheels and can be absorbed by means of the elasticity in the tyres or rubber rings of the supporting wheels.

Figure 13 shows forces F1, F2, F3 and F4 generated on the pivot shaft and lifting and friction forces F5 and F6 on the particular outer wheel 4 or 5. In order to limit the lifting forces on the outer wheel, the ratio between the height h of the pivot shaft above the ground surface 6 and the distance s between the vertical plane of the supporting wheels perpendicular to the figure plane in Figure 13 shall assume values of 0.5 or less.

Thus, it is preferred to provide the pivot shaft or the pivot axis situated at a first distance h above the ground surface. The supporting members, for example the supporting wheels, are arranged at a second distance s calculated between the vertical planes of the essentially upright supporting members, and the ratio between the first and second distances is chosen to be lower than the value 0.5.

The vehicle can assume heavily inclined positions in the parking position or in the zero speed position. According to Figure 14, a leaning-revoking arrangement 44 is in this case provided, under whose influence the vehicle can be activated to assume the zero leaning position or a leaning position of a smaller angle. Alternatively or additionally, leaning-inhibiting members can be provided, so that heavy leaning is prevented in the parked position.

According to Figure 14, the leaning-revoking members comprise or operate with hydraulic cylinders 45, 46 (or electrically controlled revoking members). The leaning-revoking members comprise a control unit 47, which controls a hydraulic source 48 (or an electrical power source) so that the hydraulic cylinders are actuated and bring about an upright or vertical position of the vehicle. The control unit herein controls a flow-determining unit 49 in a connection 50 between the cylinders. The control unit can be actuated via a wireless connection 51 or 52 from a box 53 or key 54 (cf. known opening and closing functions for cars). The unit and the box 53 and 54 respectively are here equipped with coded known transmitter and receiver units.

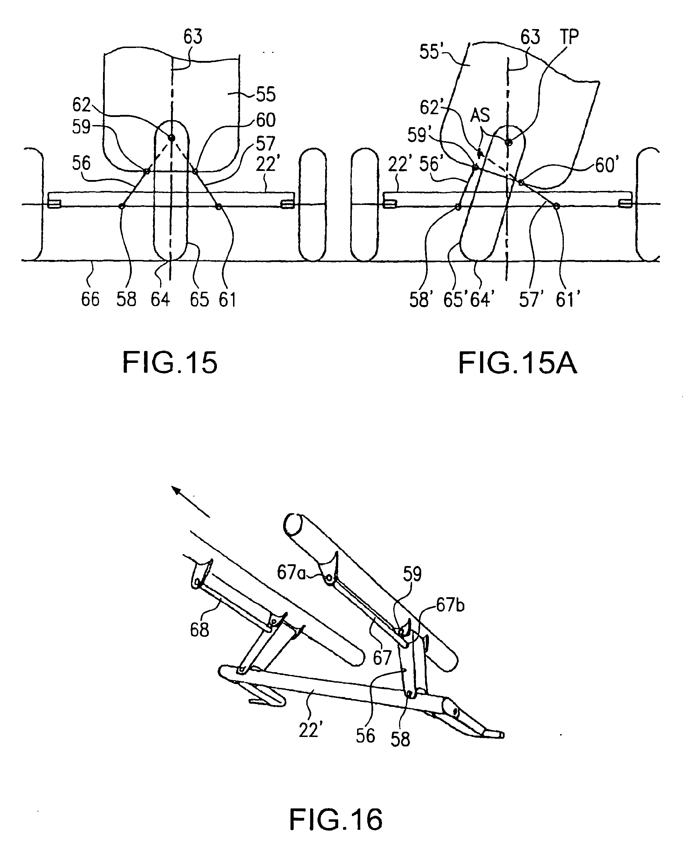

In Figures 15 and 15a a further embodiment is shown. With this further embodiment only the differences with the embodiments described above are explained. The further features and the desired effects are substantially the same as of the above mentioned embodiments. According to said embodiment, the chassis coupled together with the side member-shaft 22' is denoted by 55 and 55' respectively, which chassis have an upright position and a leaning position respectively. The coupling is realized with the aid of a four-bar mechanism comprising two link parts 56, 57 and 56', 57' respectively. Each link 56 and 57 is secured in an articulated manner, by its ends 58, 59 and 60, 61 respectively, in the shaft 22' and chassis respectively, everything viewed in the cross section coinciding with the plane of the paper in Figures 15 and 15a. As a result of the arrangement, a virtual center of rotation (pivot axis) 62 can be deemed to exist. Thus, the virtual center of rotation 62 is achieved by means of a four-bar mechanism 58, 59, 60, 61 by which the supporting member shaft 22' supports the chassis 55, 55' of the vehicle.

The center of rotation is situated in the longitudinal section plane or vertical plane 63 of the vehicle perpendicular to the paper plane in the upright chassis position according to Figure 15 and essentially coincides with the center of gravity of the vehicle, denoted by TP in Figure 15a. On the occurrence of mutual leaning between the chassis and the shaft 22', the center of rotation moves along an essentially curved line, cf. the position 62' in Figure 15a. A point of contact 64 between the wheel/the member 65 and the ground plane 66 is located in the position in the second longitudinal section plane 63 according to figure 15. In the case according to Figure 15a, the point of contact 64' has been shifted to a position outside/beside the plane 63. The center of gravity TP remains in the vertical plane 63 and the links 56 and 57 in Figure 15 have assumed the positions 56' and 57' as a result of the rotational positions 58', 59' and 60', 61' respectively in Figure 15a. Reference is made to Figure 16.

Regarding the embodiment having the four-bar linkage supporting said lateral supporting members on the frame means, said linkage is defining said pivot axis close to the center of gravity of the vehicle at least in the upright, non-leaning position of the same. Thus, said pivot axis is a virtual pivot axis. Said pivot axis (virtual pivot axis) can be provided such that it is moved away from the center of gravity TP in case the leaning angle increases as shown in Figs. 15 and 15a. Since said virtual pivot axis is close to the center of gravity, at least in the upright position of the vehicle, the leaning operation is improved close to said upright position from which each leaning action starts.

The center of rotation 62 moves along a curved line as motions occur between the side-member shaft 22' and the chassis 55, 55', viewed in a cross section through the vehicle. Said pivot axis 62 is moveable along said curved line in accordance with a leaning motion of the vehicle, wherein said curved line comes close to said center of gravity, especially extends through said center of gravity.

In order to counter leaning-promoting effects due to a formed distance AS between the center of rotation and the center of gravity TP in the cross-sectional plane according to Figure 15a, leaning-inhibiting members in the form of one or more torsion bars 67, 68 are used. The end 67a of the respective bar is fixedly clamped in a fixture or equivalent related to the chassis. At its other end 67b, the bar is fastened in the rotatable and pivotable link, i.e. the link 56 in the case shown. When the link is rotated in its bearings 58 and 59 from an original position in which the chassis assumes an upright position (see Figure 15) into a leaning position, for example the position according to Figure 15a, the torsion bar is subjected to the torsional force upon it. The respective torsion bar acted-upon counters leaning-promoting forces which are generated due to the said formed distance.

Thus, for the embodiments it is preferred to provide one or more leaning-inhibiting members. An example is given in the form of the torsion bars 67, 68 extending in the principal longitudinal direction of the vehicle. Said torsion bars 67, 68 are arranged so as to counter or prevent leaning-increasing forces which are generated due to the center of rotation, on the occurrence of leaning, assuming a distance AS from the center of gravity TP of the vehicle.

The leaning-inhibiting or leaning-revoking members can, for example, also comprise maneuverable hydraulic cylinders, which are arranged so that they can be activated when the vehicle is leaning in the raised-up position, for example markedly. The leaning-inhibiting or leaning-revoking members can be actuated by means of actions initiated from outside or inside the vehicle. The leaning-inhibiting or leaning-revoking members comprise members which can be controlled with a portable box or key.

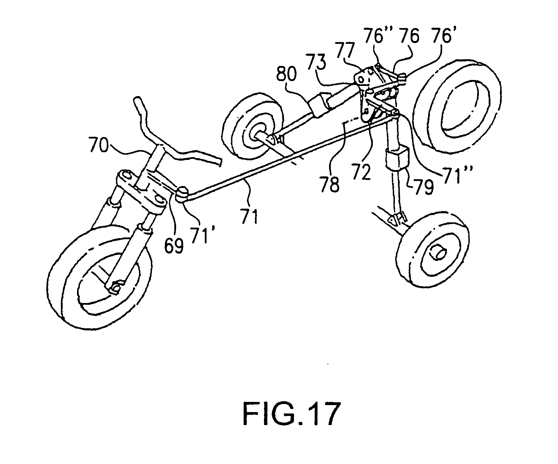

Figure 17 shows an arrangement which can be used with the above mentioned embodiments. Said arrangement shows a way to make the transition from locked low speed mode to unlocked mid speed mode more natural. The cylinders can be locked for instance by the locking member 27 in Fig 1 or by mechanical locking members 79, 80 positioned on the hydraulic cylinders. There is a linkage between the front fork to the hydraulic cylinder support in the frame so that when the cylinders are in locked mode a steering lock will put the vehicle in a leaning mode. The introduced lean angle can be near, or identical with, the lean angle the vehicle will have, with the set steering lock to counteract the centrifugal force at the determined speed at which the hydraulic cylinders will be unlocked. By doing this there will be a very clean unlocking process even when the vehicle does not have a straight pointing front wheel. One possibility to achieve this is shown in Figure 17. A steering link 69 is attached to the steering column 70, to the end of the steering link a push/pull rod 71 is connected through, for instance a ball joint 71', through another connection 71" the push/pull rod is connected to a L-shaped bracket, rotatable around a vertical axle 73 fixed to the frame. Through the connecting link 76 and its connections 76', 76" the steering movements are transferred to the hydraulic cylinder support which can be moved sideways around a longitudinal axle 78 fixed to the frame, thereby tilting the vehicle to the direction which the steering wheeled is angled. Thus, when the leaning is locked, the steering angle introduces a lean angle in a way so that at a predetermined low speed the lean angle compensates the centrifugal force.

The above mentioned embodiments relate to a vehicle which is laterally leanable by displacement of the center of gravity, for example a motor cycle, and which is arranged with a supporting member arrangement, for example supporting wheel arrangement. The arrangement comprises supporting members on both sides of the vehicle which can be brought into interaction with a ground surface for the vehicle. The arrangement is arranged to generate or transmit forces which press the supporting members against the ground surface.

In addition to a motor cycle as described, the teaching of the embodiments can also be adapted to snow-mobile context, especially to motor cycles and snow-mobiles having a front wheel or a front ski runner and a rear wheel or a drive belt.

According to the embodiments, when a leaning influence is exerted on the vehicle in either direction at the said lower speeds, the lateral supporting members are laterally displaced relative to the ground surface in a lateral direction coinciding with the leaning motion. During the lateral displacement, the supporting members are placed parallel with or are angled in relation to the longitudinal axis of the vehicle, in dependence on the leaning angles of the vehicle. By virtue of the arrangement, an influence on the leaning of the vehicle is obtained, in the form of a stabilized sensitivity in the leaning function.

Further characteristics are that the exertion of a leaning influence on the vehicle in either direction at the said higher speeds is prevented, by displacement of the point of contact between the rear wheel or rear ski runner (main supporting member) of the vehicle and a ground surface in a direction opposite to the said lateral direction coinciding with the leaning motion, from affecting the riding characteristics of the vehicle. When supporting members in the form of or comprising supporting wheels are used, the increasing (or high) rotational speeds help to prevent any effect on the said riding characteristics.

According to an preferred embodiment, the lateral or transverse displacements of the lateral supporting members are generated with the aid of the pivot axis (e. g. a pivot shaft or pivot means defining said pivot axis) which extends in the vertical plane of longitudinal direction of the vehicle through the center of gravity. The pivot axis (pivot shaft) is inclined in relation to a horizontal plane (with the vehicle is vertically upright). With the inclined pivot axis the lateral support members are also moved (pivoted) around vertical axis such that the an additional steering force is generated which supports the turning motion of the vehicle.

According to the embodiment with the single pivot shaft, said pivot shaft defines the pivot axis which extends close to the center of gravity of the vehicle. Preferably, said pivot shaft (pivot shaft portion) is provided close to or extends through said center of gravity with regard to the longitudinal, lateral and vertical extension of the vehicle.

In an alternative embodiment, the lateral or transverse displacements of the lateral supporting members can be generated with the aid of two or more pivot shafts which are arranged such that a virtual pivot axis is provided. In the vertical upright non-leaned position of the vehicle said virtual pivot axis extends close to the center of gravity or through the center of gravity. The generated motion of the respective pivot axis can in this case be transmitted to the respective supporting member concerned via one or more link arms or supporting shafts. Said virtual pivot axis is moveable along a curved line in accordance with a leaning motion of the vehicle, wherein said curved line comes close to said center of gravity, especially extends through said center of gravity.

The respective leaning of the vehicle is achieved or cancelled with the aid of displacements of the center of gravity of the vehicle, i.e. the driver and possibly the passenger produce the said displacement or displacements with his or their body weights during riding. Thus, the position of the center of gravity with a combination of the vehicle and the driver should not be considered as being completely fixed. According to the embodiments, a center of gravity of the vehicle without any driver/passenger or a center of gravity of the vehicle with an assumed middle weight of the driver and passenger is taken into consideration.

According to the embodiments, locking members forming part of the arrangement can be activated in order to keep the vehicle in a desired leaning position, in particular in the lower speed range, and the zero leaning position associated with, for example, parking of the vehicle. Where the vehicle is leaning, for example markedly, leaning-revoking members can be activated.

According to a preferred embodiment, the vehicle is constructed with a center of gravity which is placed 0.25-0.6 meters, preferably between 0.4 and 0.5 meters, above the ground surface. The arrangement is arranged with members which produce pressing-down forces and which can be constituted by hydraulic cylinders or pneumatically and/or electrically working members. The arrangement can also be arranged, additionally or alternatively, such that it is exposable to manually applicable pressing-down forces, for example the driver and/or a passenger can use his/their body weight(s) to produce pressing-down forces. The supporting members or supporting wheels which are pressed by the pressing-down forces against the ground surface over the full range of speed of the vehicle are arranged so as to receive pressing-down forces which are chosen such that, in the said lower speed range, they create a friction between the supporting members and the ground surface, which friction produces a leaning function sensitive to the displacement of the center of gravity. The driver and any passenger shall therefore feel that a smooth and sensitive leaning function is obtained with the displacement of the center of gravity.

The arrangement is arranged so as to lend the vehicle stability on the occurrence of leaning in the lower speed range and the front main members of the vehicle, which can be brought into interaction with the ground surface, by which is meant in a motor cycle context, the front wheel of the vehicle takes over the stability function on the occurrence of leaning as the speed of the vehicle increases in order to take over fully the stabilizing function in the higher speed range. The transfer of the stabilizing function, on the occurrence of leaning, from the supporting member arrangement to the vehicle itself (which acquires stabilization through the rotation of the front wheel), or vice versa, occurs smoothly, for example sinusoidally, so that the riding function of the vehicle is not impaired. The lower speed range extends preferably from 0 to ca. 25 km/h and the higher speed range extends from the latter speed value and upwards.

The arrangement is arranged with locking members which, in dependence on their activation, lock the vehicle in a particular leaning position, for example the zero leaning position. The locking member or locking members can here be arranged so as to bring about its/their locking at at least the lower speeds within the lower speed range. Additionally or alternatively, the respective locking member can be activated with a manual actuating member (button or equivalent), with the starting or stopping function of the vehicle and/or with speed-detecting and/or leaning-detecting members. Such activations and deactivations can be effected in a manner which is known per se. The vehicle can also be arranged with leaning-revoking members, e.g. hydraulic cylinders or members which can be operated electronically by a push button from outside or inside the vehicle. Electronically operated arrangements can also be used here, for example arrangements in which the leaning-revoking function can be initiated with radio wave control or some other control system, for example in a known manner from a key or box.

In the embodiments, link means 69, 71, 72, 76, 77 are provided for directly transmitting a steering angle at the front main support member to said lateral supporting members via the locking means 79, 80. The vehicle is leanable in accordance with the steering angle with the locking means 79, 80 in a locked position. Thus, the transition from very low speeds in the low speed range, where the leaning mechanism is in locked position, normally upright, a function, preferable a mechanical connection, is introduced which makes the vehicle to lean proportional to the steering angle so that at a predetermined very low speed, preferable the speed where the driver normally unlocks the hydraulic cylinders or an automatic device unlocks the hydraulic cylinders, the lean angle compensates the centrifugal force. With this connection the transition from locked position to unlocked position feels more natural for the driver.

The transverse displacement function for the supporting members, which is generated by the pivot shaft when the center of gravity is displaced, is transmitted via one or more link or shaft parts which are connected to the respective pivot shaft and which, at their ends, support the supporting members. In one embodiment, the pivot shaft, together with shaft parts supporting the supporting members, forms a bridge extending in the transverse direction of the vehicle. The vehicle have front and rear members which can be brought into interaction with the ground surface, i.e. front and rear wheels or front and rear ski runners. In a preferred embodiment, the center of gravity of the vehicle is placed or situated essentially midway between front and rear members. The supporting member arrangement also is preferably arranged essentially midway between the front and rear members. The vehicle has a chassis part or enclosing part and the supporting members or supporting wheels prevent, by virtue of their lateral displacement functions, leaning of the vehicle from encroaching on the chassis, body or enclosing part space.

The said lateral displacement is realized on the occurrence of leaning in the higher speed range, in which friction or rubbing is prevented from happening by the said displacement of the point of contact between the rear wheel and the ground surface and the increase in rotational speed of the supporting wheels and/or deformation or elasticity in the supporting wheel tyre(s).

The arrangement, on the link or shaft part up to the respective supporting member (supporting wheel), can have space for foot application, so that a driver or passenger is capable of producing a pressing-down force for the supporting member against the ground surface. The respective supporting member can consist of a single, slightly larger supporting wheel, or an arrangement or a construction of supporting wheels, for example in the form of a bogie which can have a number of smaller wheels placed side by side or one behind the other. Alternatively, a supporting member arrangement involving a ski runner with pass-through wheels on the same or different levels one behind the other can be arranged.

When a pivot shaft forms part of a common unit together with shaft parts extending in the transverse direction of the vehicle, these can support at their ends one or more link parts to which the respective supporting member or supporting member construction is resiliently secured. The lateral displacement function is chosen such that, on maximum leaning of the vehicle, the stability created by the supporting members ensures that the center of gravity is located at a considerable, i.e. safe, distance inside the particular supporting member. The respective supporting member, on the respective lateral displacement, can assume an upright position both during the lateral displacement and in the laterally displaced position.

According to the embodiments, a relationship between the height of the pivot shaft above the ground surface and the distance between the vertical planes of the supporting wheels through the center of the supporting wheels can also be chosen such that it has a value of 0.5 or less. In one embodiment, the vehicle is arranged with a virtual center of rotation achieved by means of a four-bar mechanism which can be brought into interaction with one or more return members and/or members which correspond to leaning-propelling forces, for example in the form of torsion bars.

By virtue of that which has been stated above, a two-wheeled vehicle, for example in the form of a motor cycle, can be provided with "intelligently" working supporting wheels or equivalent. The arrangement enables the supporting wheels to interact with or be activated against the ground surface over the full range of speed, without the motor cycle sensation as such being impaired at higher speeds in particular. Rubbing or friction is avoided in the lateral direction at the said higher speeds by an increase in the rotational speed of the supporting wheels and the said displacement of the point of contact between rear wheel and ground surface. Considerable advantages are obtained by the supporting shaft and the supporting wheels being placed in front of the rear shaft in connection with the center of gravity. Preferably, the center of gravity and the supporting wheels are placed midway between the front and rear wheels of the motor cycle. In the platform formed by the supporting wheels and the front and rear wheels, the center of gravity thus comes to be situated well inside the outer limit line of the platform, which ensures stable functioning even at maximum leaning. The arrangement can optimally be used if the premise is adopted that the vehicle turns about the point of contact with the ground. The highly placed pivot point means that good stability can be obtained at low speeds. The said virtual centers of rotation and leaning-inhibiting members/torsion bar(s) can be utilized when the motor of the vehicle is positioned or placed such that conventional pivot shaft(s) cannot suitably be used.

The stability of the vehicle is also dependent on the distances between the supporting members or supporting wheels. The distance in question can be adapted to the various vehicles concerned and in one embodiment the distance in question can measure between 0.5 and 0.8 meters.

According to the embodiments, when the vehicle is stationary and is leaning, for example markedly, members which inhibit the leaning or revoke the leaning, for example hydraulic cylinders, are activated, for example by manual control from outside or inside the vehicle, so that the vehicle is righted.

The arrangement 3 is arranged so as to lend the vehicle 30 stability on the occurrence of leaning α, α' in the lower speed range and in that the main members 1, 2 of the vehicle, which can be brought into interaction with the ground surface 6, for example the front wheel of the vehicle, take over the stability function on the occurrence of leaning α, α' as the speed of the vehicle increases in order to fully take over the stability function in the higher speed range. The transfer of the stability function, on the occurrence of leaning α, α', from the supporting member arrangement 3 to the vehicle itself, or vice versa, occurs smoothly, for example sinusoidally. In case higher rubbing or friction is required between supporting wheels and ground surface at lower speeds, the center of gravity being shifted closer to the front wheel or front ski runner.

According to the embodiments, the vehicle 30 has front and rear members 1, 2, for example wheels or ski runners, which can be brought into interaction with the ground surface, in that the center of gravity 28, viewed in the horizontal plane of the vehicle, is situated essentially midway between the said front and rear members, and in that the supporting member arrangement 3 also is arranged essentially midway between the front and rear members 1, 2.

The embodiments described above teach a laterally leanable vehicle having a frame means connecting a front main support member 1 and a rear main support member 2, and lateral supporting members 4,5 disposed on both sides of the vehicle, said lateral supporting members 4, 5 are pivotably supported around a pivot axis 17, 62 on said frame means, wherein at least in an upright non-leaned position of said vehicle said pivot axis 17, 62 extends in a longitudinal vertical plane 29, 63 of the vehicle and close to a center of gravity 28, TP of the vehicle.

According to an embodiment, said pivot axis is a center axis of a pivot shaft 17 supporting said lateral supporting members 4, 5 on said frame means, wherein said pivot shaft 17 is provided close to the center of gravity 28 of the vehicle.

According to an embodiment, said lateral supporting members comprise a right lateral supporting member 4 and a left lateral supporting member 5 and at least two pivot shafts 17a, 17b are provided for supporting said lateral supporting members 4, 5 on said frame means, respectively, wherein said pivot shafts 17a, 17b are defining said pivot axis close to the center of gravity of the vehicle at least in the upright non-leaned position of said vehicle.

According to an embodiment, a link means 56, 57; 56', 57', especially a four-bar linkage, is provided for supporting said lateral supporting members 4, 5 on said frame means, wherein said link means 56, 57; 56', 57' is defining said pivot axis 62 close to the center of gravity TP of the vehicle at least in the upright non-leaned position of said vehicle. Said pivot axis 62 is moveable along a curved line in accordance with a leaning motion of the vehicle, wherein said curved line comes close to said center of gravity, especially extends through said center of gravity.

According to embodiments, a lateral link means 22, 22' is provided for connecting said lateral supporting members 4, 5 with each other.

Said pivot axis extends through the center of gravity 28, TP of the vehicle at least in the upright non-leaned position of said vehicle. Said pivot axis is inclined in relation to a horizontal plane of the vehicle in the upright non-leaned position.

Furthermore, means 7, 8, 7', 8' are provided for generating a pressing-down force F, F', F" applied to lateral supporting members 4, 5. Locking means 27, 79, 80 are provided for locking a leaned position of the frame means relatively to the lateral supporting members 4, 5, especially a position with a lean angle of zero. Link means 69, 71, 72, 76, 77 are provided for directly transmitting a steering angle at the front main support member to said lateral supporting members via the locking means 79, 80, wherein the vehicle is leanable in accordance with the steering angle with the locking means 79, 80 in a locked position. Leaning-inhibiting or leaning-revoking means are provided for assisting a motion of the vehicle from a leaning position to a raised-up position.

The pressing-down force generating means 7, 8, 7', 8', and/or the locking means 27, 79, 80, and/or the leaning-inhibiting or leaning-revoking means are controllable by a manual actuating member and/or in accordance with a starting or stopping function of the vehicle and/or by speed-detecting means and/or leaning-detecting means.

According to embodiments, the center of gravity 28 is positioned at a distance of 0.25-0.6 meters, preferably between 0.4 and 0.5 meters, above a ground surface. The pivot axis is positioned at a first distance h above a ground surface and the lateral supporting members 4, 5, arranged at a second distance s in a vertical direction, wherein a ratio between the first and second distances h/s is lower than the 0.5.

According to embodiments, the front main support member and/or the rear main support member are main support wheels 1,2, especially of a motor cycle, or ski means, especially of a snow mobile, and the lateral supporting members are lateral supporting wheels 4,5 or ski means or a ski-wheel combination means 36, 37.

## Claims

1. Laterally leanable vehicle having a frame means connecting a front main support member (1) and a rear main support member (2) being in contact with the ground (6) and leanable by a leaning angle (α) with regard to an upright non-leaned position, and lateral supporting members (4,5) disposed on both sides of the vehicle and being in contact with the ground (6), said lateral supporting members (4, 5) are pivotably supported around a pivot axis (17, 62) on said frame means, at least in the upright non-leaned position of said vehicle said pivot axis (17, 62) extends in a longitudinal vertical plane (29, 63) of the vehicle and close to a center of gravity (28, TP) of the vehicle,and means (7, 8, 7', 8') are provided for generating a pressing-down force (F, F', F") applied to the lateral supporting members (4, 5), **characterized in that** said lateral supporting members (4,5) are displaceable in transverse direction (24, 25) regarding a contact point with the ground (6) of the front or rear main support member (1, 2) in accordance with the leaning angle (α).

2. Laterally leanable vehicle according to claim 1, **characterized in that** said pivot axis is a center axis of a pivot shaft (17) supporting said lateral supporting members (4, 5) on said frame means, wherein said pivot shaft (17) is provided close to the center of gravity (28) of the vehicle.

3. Laterally leanable vehicle according to claim 1, **characterized in that** said lateral supporting members comprise a right lateral supporting member (4) and a left lateral supporting member (5) and at least two pivot shafts (17a, 17b) are provided for supporting said lateral supporting members (4, 5) on said frame means, respectively, wherein said pivot shafts (17a, 17b) are defining said pivot axis close to the center of gravity of the vehicle at least in the upright non-leaned position of said vehicle.

4. Laterally leanable vehicle according to claim 1, **characterized in that** a link means (56, 57; 56', 57'), especially a four-bar linkage, is provided for supporting said lateral supporting members (4, 5) on said frame means, wherein said link means (56, 57; 56', 57') is defining said pivot axis (62) close to the center of gravity (TP) of the vehicle at least in the upright non-leaned position of said vehicle.

5. Laterally leanable vehicle according to claim 4, **characterized in that** said pivot axis (62) is moveable along a curved line in accordance with a leaning motion of the vehicle, wherein said curved line comes close to said center of gravity, especially extends through said center of gravity.

6. Laterally leanable vehicle according to at least one of the claims 1,2,4 or 5, **characterized in that** a lateral link means (22, 22') is provided for connecting said lateral supporting members (4, 5) with each other.

7. Laterally leanable vehicle according to at least one of the claims 1 to 6, **characterized in that** said pivot axis extends through the center of gravity (28, TP) of the vehicle at least in the up right non-leaned position of said vehicle.

8. Laterally leanable vehicle according to at least one of the claims 1 to 7, **characterized in that** said pivot axis is inclined in relation to a horizontal plane of the vehicle in the upright non-leaned position.

9. Laterally leanable vehicle according to at least one of the claims 1 to 8, **characterized in that** locking means (27, 79, 80) are provided for locking a leaned position of the frame means relatively to the lateral supporting members (4, 5), especially a position with a lean angle of zero.

10. Laterally leanable vehicle according to claim 9, **characterized in that** link means (69, 71, 72, 76, 77) are provided for directly transmitting a steering angle at the front main support member to said lateral supporting members via the locking means (79, 80), wherein the vehicle is leanable in accordance with the steering angle with the locking means (79, 80) in a locked position.

11. Laterally leanable vehicle according to at least one of the claims 1 to 10, **characterized in that** leaning-inhibiting or leaning-revoking means are provided for assisting a motion of the vehicle from a leaning position to a raised-up position.

12. Laterally leanable vehicle according to at least one of the claims 9 to 11, **characterized in that** the pressing-down force generating means (7, 8, 7', 8'), and/or the locking means (27, 79, 80), and/or the leaning-inhibiting or leaning-revoking means are controlable by a manual actuating member and/or in accordance with a starting or stopping function of the vehicle and/or by speed-detecting means and/or leaning-detecting means.

13. Laterally leanable vehicle according to at least one of the claims 1 to 12, **characterized in that** the center of gravity (28) is positioned at a distance of 0.25-0.6 meters, preferably between 0.4 and 0.5 meters, above a ground surface.

14. Laterally leanable vehicle according to at least one of the claims 1 to 13**, characterized in that** the pivot axis is positioned at a first distance (h) above a ground surface and the lateral supporting members (4, 5), arranged at a second distance (s) in a vertical direction, wherein a ratio between the first and second distances (h/s) is lower than the 0.5.

15. Laterally leanable vehicle according to at least one of the claims 1 to 14, **characterized in that** the front main support member and/or the rear main support member are main support wheels (1,2), especially of a motor cycle, or ski means, especially of a snow mobile, and the lateral supporting members are lateral supporting wheels (4,5) or ski means or a ski-wheel combination means (36, 37).

## Patentansprüche

1. Seitlich neigbares Fahrzeug mit einer Rahmenvorrichtung, die ein vorderes Haupt-Stützelement (1) und ein hinteres Haupt-Stützelement (2) verbindet, welche in Kontakt mit dem Boden (6) sind und um einen Neigungswinkel (α) in Bezug auf eine aufrechte nicht-geneigte Lage neigbar sind, und mit Seiten-Stützelementen (4, 5), die auf beiden Seiten des Fahrzeugs angeordnet sind und in Kontakt mit dem Boden (6) sind, wobei die Seiten-Stützelemente (4, 5) um eine Drehachse (17, 62) drehbar an der Rahmenvorrichtung gelagert sind und sich zumindest in der aufrechten nicht-geneigten Lage des Fahrzeugs die Drehachse (17, 62) in einer vertikalen Längsebene (29, 63) des Fahrzeugs und nahe an einem Schwerpunkt (28, TP) des Fahrzeugs erstreckt, und Mittel (7, 8, 7', 8') vorgesehen sind, um eine nach unten drückende Kraft (F, F', F") auf die Seiten-Stützelemente (4, 5) zu erzeugen,
**dadurch gekennzeichnet, dass**
die Seiten-Stützelemente (4, 5) in Bezug auf einen Kontaktpunkt des vorderen oder hinteren Haupt-Stützelements (1, 2) mit dem Boden (6) dem Neigungswinkel (α) entsprechend in Querrichtung (24, 25) verlagerbar sind.

2. Seitlich neigbares Fahrzeug nach Anspruch 1, **dadurch gekennzeichnet, dass** die Drehachse eine Mittelachse einer Gelenkwelle (17) ist, welche die Seiten-Stützelemente (4, 5) an der Rahmenvorrichtung lagert, worin die Gelenkwelle (17) nahe an dem Schwerpunkt (28) des Fahrzeugs vorgesehen ist.

3. Seitlich neigbares Fahrzeug nach Anspruch 1, **dadurch gekennzeichnet, dass** die Seiten-Stützelemente ein rechtes Seiten-Stützelement (4) und ein linkes Seiten-Stützelement (5) umfassen und mindestens zwei Gelenkwellen (17a, 17b) zur jeweiligen Lagerung der Seiten-Stützelemente (4, 5) auf der Rahmenvorrichtung vorgesehen sind, worin die Gelenkwellen (17a, 17b) zumindest in der aufrechten nicht-geneigten Lage des Fahrzeugs die Drehachse nahe an dem Schwerpunkt des Fahrzeugs festlegen.

4. Seitlich neigbares Fahrzeug nach Anspruch 1, **dadurch gekennzeichnet, dass** ein Verbindungsglied (56, 57; 56', 57'), insbesondere eine Vierstab-Verbindung, vorgesehen ist, um die Seiten-Stützelemente (4, 5) an der Rahmenvorrichtung zu lagern, worin das Verbindungsglied (56, 57; 56', 57') zumindest in der aufrechten nicht-geneigten Lage des Fahrzeugs die Drehachse (62) nahe an dem Schwerpunkt (TP) des Fahrzeugs festlegt.

5. Seitlich neigbares Fahrzeug nach Anspruch 4, **dadurch gekennzeichnet, dass** die Drehachse (62) entlang einer gekrümmten Linie entsprechend einer Neigungsbewegung des Fahrzeugs bewegbar ist, worin die gekrümmte Linie nahe an den Schwerpunkt gelangt, sich insbesondere durch den Schwerpunkt erstreckt.

6. Seitlich neigbares Fahrzeug nach wenigstens einem der Ansprüche 1, 2, 4 oder 5, **dadurch gekennzeichnet, dass** ein Seiten-Verbindungsglied (22, 22') zur Verbindung der Seiten-Stützelemente (4, 5) miteinander vorgesehen ist.

7. Seitlich neigbares Fahrzeug nach wenigstens einem der Ansprüche 1 bis 6, **dadurch gekennzeichnet, dass** sich die Drehachse zumindest in der aufrechten nicht-geneigten Lage des Fahrzeugs durch den Schwerpunkt (28, TP) des Fahrzeugs erstreckt.

8. Seitlich neigbares Fahrzeug nach wenigstens einem der Ansprüche 1 bis 7, **dadurch gekennzeichnet, dass** die Drehachse in Bezug auf eine Horizontalebene des Fahrzeugs in der aufrechten nicht-geneigten Lage schräg ist.

9. Seitlich neigbares Fahrzeug nach wenigstens einem der Ansprüche 1 bis 8, **dadurch gekennzeichnet, dass** Sperrmittel (27, 79, 80) vorgesehen sind, um eine geneigte Lage der Rahmenvorrichtung relativ zu den Seiten-Stützelementen (4, 5) zu sperren, insbesondere eine Lage mit einem Neigungswinkel von null.

10. Seitlich neigbares Fahrzeug nach Anspruch 9, **dadurch gekennzeichnet, dass** Verbindungsmittel (69, 71, 72, 76, 77) vorgesehen sind, um einen Lenkwinkel am vorderen Haupt-Stützelement über das Sperrmittel (79, 80) direkt an die Seiten-Stützelemente zu übertragen, worin das Fahrzeug entsprechend dem Lenkwinkel neigbar ist, wobei das Sperrmittel (79, 80) in einer Arretierstellung ist.

11. Seitlich neigbares Fahrzeug nach wenigstens einem der Ansprüche 1 bis 10, **dadurch gekennzeichnet, dass** Neigehemmungs- oder Neigewiderrufungsmittel vorgesehen sind, um eine Bewegung des Fahrzeugs von einer geneigten Lage zu einer aufgerichteten Lage zu unterstützen.

12. Seitlich neigbares Fahrzeug nach wenigstens einem der Ansprüche 9 bis 11, **dadurch gekennzeichnet, dass** das Mittel (7, 8, 7', 8'), welches die nach unten drückende Kraft erzeugt, und / oder das Sperrmittel (27, 79, 80) und / oder das Neigehemmungs- oder Neigewiderrufungsmittel durch ein manuelles Betätigungselement und / oder entsprechend einer Start- oder Stopp-Funktion des Fahrzeugs und / oder durch Geschwindigkeitserfassungsmittel und / oder Neigeerfassungsmittel steuerbar ist bzw. sind.

13. Seitlich neigbares Fahrzeug nach wenigstens einem der Ansprüche 1 bis 12, **dadurch gekennzeichnet, dass** der Schwerpunkt (28) in einem Abstand von 0,25 - 0,6 Meter, vorzugsweise zwischen 0,4 und 0,5 Meter, über einer Bodenoberfläche angeordnet ist.

14. Seitlich neigbares Fahrzeug nach wenigstens einem der Ansprüche 1 bis 13, **dadurch gekennzeichnet, dass** die Drehachse in einem ersten Abstand (h) über einer Bodenoberfläche positioniert ist und die Seiten-Stützelemente (4, 5) in einem zweiten Abstand (s) in einer vertikalen Richtung angeordnet sind, worin ein Verhältnis des ersten und zweiten Abstands (h/s) kleiner als 0,5 ist.

15. Seitlich neigbares Fahrzeug nach wenigstens einem der Ansprüche 1 bis 14, **dadurch gekennzeichnet, dass** das vordere Haupt-Stützelement und / oder das hintere Haupt-Stützelement Hauptstützräder (1, 2) sind, insbesondere eines Motorrads oder einer Skivorrichtung, insbesondere eines Schneemobils, und die Seiten-Stützelemente Seiten-Stützräder (4, 5) oder Skimittel oder eine Ski-Rad-Kombinationsvorrichtung (6, 37) sind.

## Revendications

1. Véhicule à inclinaison latérale comprenant des moyens de cadre en connexion avec un élément de support principal avant (1) et un élément de support principal arrière (2) étant en contact avec le sol (6) et pouvant être incliné sur un angle d'inclinaison (α) par rapport à une position verticale de non-inclinaison, et des éléments de support latéraux (4, 5) disposés sur les deux côtés du véhicule et étant en contact avec le sol (6), lesdits éléments de support latéraux (4, 5) sont supportés en pivotement autour d'un axe de pivotement (17, 62) sur lesdits moyens de cadre au moins dans la position verticale de non-inclinaison dudit véhicule, ledit axe de pivotement (17, 62) s'étend dans un plan vertical longitudinal (29, 63) du véhicule et à proximité d'un centre de gravité (28, TP) du véhicule, et des moyens (7, 8, 7', 8') sont prévus afin de générer une force de poussée vers le bas (F, F', F") qui s'applique sur les éléments de support latéraux (4, 5), **caractérisé en ce que** lesdits éléments de support latéraux (4, 5) peuvent se déplacer dans une direction transversale par rapport à un point de contact avec le sol (6) de l'élément de support principal avant ou arrière (1, 2) en fonction de l'angle d'inclinaison (α).

2. Véhicule à inclinaison latérale selon la revendication 1, **caractérisé en ce que** ledit axe de pivotement est un axe central d'un arbre de pivotement (17) qui supporte lesdits éléments de support latéraux (4, 5) sur lesdits moyens de cadre, dans lequel ledit arbre de pivotement (17) est prévu à proximité du centre de gravité (28) du véhicule.

3. Véhicule à inclinaison latérale selon la revendication 1, **caractérisé en ce que** lesdits éléments de support latéraux comprennent un élément de support latéral droit (4) et un élément de support latéral gauche (5) et au moins deux arbres de pivotement (17a, 17b) sont prévus afin de supporter respectivement lesdits éléments de support latéraux (4, 5) sur lesdits moyens de cadre, dans lequel lesdits arbres de pivotement (17a, 17b) définissent ledit axe de pivotement à proximité du centre de gravité du véhicule au moins dans la position verticale de non-inclinaison dudit véhicule.

4. Véhicule à inclinaison latérale selon la revendication 1, **caractérisé en ce que** des moyens de connexion (56, 57 ; 56', 57'), en particulier une connexion à quatre barres, sont prévues afin de supporter lesdits éléments de support latéraux (4, 5) sur lesdits moyens de cadre, dans lequel lesdits moyens de connexion (56, 57 ; 56', 57') définissent ledit axe de pivotement (62) à proximité du centre de gravité (TP) du véhicule au moins dans la position verticale de non-inclinaison dudit véhicule.

5. Véhicule à inclinaison latérale selon la revendication 4, **caractérisé en ce que** ledit axe de pivotement (62) peut se déplacer le long d'une ligne courbe en fonction d'un mouvement d'inclinaison du véhicule, dans lequel ladite ligne courbe atteint la proximité dudit centre de gravité, s'étend en particulier au travers dudit centre de gravité.

6. Véhicule à inclinaison latérale selon au moins l'une des revendications 1, 2, 4 ou 5, **caractérisé en ce que** des moyens de connexion latéraux (22, 22') sont prévus afin de connecter l'un à l'autre lesdits éléments de support latéraux (4, 5).

7. Véhicule à inclinaison latérale selon au moins l'une des revendications 1 à 6, **caractérisé en ce que** ledit axe de pivotement s'étend au travers du centre de gravité (28, TP) du véhicule au moins dans la position verticale de non-inclinaison dudit véhicule.

8. Véhicule à inclinaison latérale selon au moins l'une des revendications 1 à 7, **caractérisé en ce que** ledit axe de pivotement est incliné par rapport à un plan horizontal du véhicule dans la position verticale de non-inclinaison.

9. Véhicule à inclinaison latérale selon au moins l'une des revendications 1 à 8, **caractérisé en ce que** des moyens de blocage (27, 79, 80) sont prévus afin de bloquer une position inclinée des moyens de cadre par rapport aux éléments de support latéraux (4, 5), en particulier dans une position dont l'angle d'inclinaison est égal à zéro.

10. Véhicule à inclinaison latérale selon la revendication 9, **caractérisé en ce que** des moyens de connexion (69, 71, 72, 76, 77) sont prévus afin de transmettre directement un angle de direction donné à l'élément de support principal avant aux dits éléments de support latéraux par l'intermédiaire des moyens de blocage (79, 80), dans lequel le véhicule peut être incliné en fonction de l'angle de direction à l'aide des moyens de blocage (79, 80) dans une position de blocage.

11. Véhicule à inclinaison latérale selon au moins l'une des revendications 1 à 10, **caractérisé en ce que** des moyens de suppression d'inclinaison ou d'annulation d'inclinaison sont prévus afin d'assister un mouvement du véhicule entre une position d'inclinaison et une position relevée à la verticale.

12. Véhicule à inclinaison latérale selon au moins l'une des revendications 9 à 11, **caractérisé en ce que** les moyens générateurs de force de poussée vers le bas (7, 8, 7', 8'), et / ou les moyens de blocage (27, 79, 80), et / ou les moyens de suppression d'inclinaison ou d'annulation d'inclinaison peuvent être commandés au moyen d'un élément à actionnement manuel et / ou à l'aide d'une fonction de démarrage ou d'arrêt du véhicule et / ou à l'aide de moyens de détection de vitesse et / ou de moyens de détection d'inclinaison.

13. Véhicule à inclinaison latérale selon au moins l'une des revendications 1 à 12, **caractérisé en ce que** le centre de gravité (28) est positionné à une distance de 0,25 à 0,60 mètre, de préférence entre 0,4 et 0,5 mètre, au-dessus de la surface du sol.

14. Véhicule à inclinaison latérale selon au moins l'une des revendications 1 à 13, **caractérisé en ce que** l'axe de pivotement est positionné à une première distance (h) au-dessus de la surface du sol et **en ce que** les éléments de support latéraux (4, 5) sont prévus à une seconde distance (s) dans une direction verticale, dans lequel un rapport entre les première et seconde distances (h / s) est inférieur à 0,5.

15. Véhicule à inclinaison latérale selon au moins l'une des revendications 1 à 14, **caractérisé en ce que** l'élément de support principal avant et / ou l'élément de support principal arrière sont des roues de support principales (1, 2), en particulier celles d'un motocycle, ou des moyens de ski, en particulier ceux d'une motoneige, et **en ce que** les éléments de support latéraux sont des roues de support latérales (4, 5) ou des moyens de ski ou des moyens combinés de ski et de roue.
